# EUROPÄISCHE PATENTSCHRIFT

(11) **EP 1 046 567 B1**
(45) Veröffentlichungstag und Bekanntmachung des Hinweises auf die Patenterteilung: **09.06.2004**
(21) Anmeldenummer: 00108010.0
(22) Anmeldetag: 19.04.2000
(51) Int. Cl.: B62D 1/10

(54) **Lenkrad mit Klemm-Nabe**
Steering wheel with clamping hub
Volant de direction avec moyeu de serrage

(30) Priorität: 22.04.1999 DE 29907181 U
(43) Veröffentlichungstag der Anmeldung: 25.10.2000
(73) Patentinhaber: TRW Automotive Safety Systems GmbH, 63743 Aschaffenburg (DE)
(72) Erfinder: Nigrin, Anke, 97816 Lohr (DE)
(74) Vertreter: Degwert, Hartmut, Dipl.-Phys.

(56) Entgegenhaltungen:
- DE-A- 19 734 785
- DE-B- 1 102 499
- DE-U- 29 722 825
- US-A- 5 333 978

## Beschreibung

Die Erfindung betrifft ein Lenkrad mit einer zur Befestigung auf einer Lenksäule ausgebildeten, einteiligen Nabe, die eine zentrale Bohrung zum Aufsetzen auf die Lenkwelle sowie parallel zur Bohrung angeordnete Schlitze aufweist, durch die zwei Nabenbereiche derart freigelegt sind, daß sie unter Verringerung des Bohrungsdurchmessers mittels einer sich tangential zur Bohrung erstreckenden Spannschraube elastisch gegeneinander verspannbar sind.

Derartige Lenkräder werden vorzugsweise gießtechnisch aus Aluminium- oder Magnesiumlegierungen hergestellt und mit einer Ummantelung aus Kunststoff versehen. Da bei modernen Fahrzeugen die Lenksäule aus Sicherheitsgründen deutlich unterhalb der Ebene des Lenkradkranzes endet, verlaufen die Lenkradspeichen trichterförmig vom Lenkradkranz zur Lenkradnabe, die zur Befestigung auf der Lenksäule ausgebildet ist. Eine seit Jahrzehnten bewährte und in zahlreichen Fahrzeugserien angewandte Befestigungsart ist dadurch gekennzeichnet, daß die Nabe des Lenkrades auf das Ende der Lenksäule aufgesteckt und mittels einer endseitig auf die Lenksäule aufgeschraubten Mutter gegen einen Konusbereich der Lenksäule verspannt wird. Diese, im wesentlichen kraftschlüssige Verbindung wird in Umfangsrichtung meist durch eine formschlüssige Verbindung ergänzt, indem Lenksäule und Lenkradnabe mit einer aufeinander abgestimmten, axial ausgerichteten Kerbverzahnung versehen werden.

Diese einfache und bewährte Verbindung des Lenkrades mit der Lenksäule ist bei der heute üblichen Ausstattung von Kraftfahrzeugen mit einem Fahrerairbag nur möglich, wenn das Airbagmodul montiert werden kann, nachdem das Lenkrad mit der Lenksäule verbunden worden ist. Diese Montagefolge ist unerwünscht, weil sie die Endmontage des Fahrzeugs verzögert und weil die Befestigung des Airbagmoduls im Lenkrad konstruktiv darauf abgestellt werden muß, was - verglichen mit einer Vormontage des Airbagmoduls im Lenkrad - aufwendiger und komplizierter ist. Man ist daher seit langem bestrebt, Möglichkeiten aufzuzeigen, bei denen das Lenkrad zusammen mit dem eingebauten Airbagmodul der Endmontage zugeführt und auf der Lenksäule befestigt werden kann. Soweit dabei parallel zur Lenksäule angeordnete, von der Rückseite des Lenkrades her einzusetzende Schrauben vorgesehen sind, ist die Montage sehr erschwert, weil der Raum hinter dem Lenkrad bei vielen Fahrzeugmodellen nur schwer zugänglich ist. Besser sind Verbindungsmöglichkeiten, bei denen eine oder mehrere Befestigungsschrauben radial zur Lenkradsäule angeordnet sind. Dabei sind jedoch meist weitere Befestigungsteile erforderlich, um das Lenkrad axial zur Lenksäule festlegen zu können und eine für die Übertragung der Lenkkräfte zuverlässige Verbindung zu schaffen. Die Handhabung zusätzlicher Befestigungsteile ist umständlich und erfordert bei der Endmontage, die aus wirtschaftlichen Gründen so kurz wie möglich sein soll, noch zuviel Zeit.

Aus dem deutschen Gebrauchsmuster 297 22 825 ist ein Lenkrad der eingangs genannten Art bekannt geworden, bei dem der Nabenbereich durch parallel zur Lenksäulenachse angeordnete Schlitze in Materialbereiche unterteilt ist, die elastisch gegeneinander verspannbar sind. Nachdem das Lenkrad auf die Lenksäule aufgesetzt ist und beide Teile in der vorgesehenen Position zueinander ausgerichtet sind, erfolgt die Verspannung durch eine Schraube, die tangential zur Bohrung in der Lenkradnabe angeordnet ist und einmal die Materialbereiche der Lenkradnabe gegen das Ende der Lenksäule andrückt und zum andern tangential in eine an der Lenksäule umlaufende Nut eingreift und damit eine zusätzliche formschlüssige axiale Festlegung zwischen und Lenkrad und Lenksäule bildet. Damit lassen sich alle Anforderungen hinsichtlich kurzer Endmontagezeiten sowie einer konstruktiv vereinfachten Baueinheit aus Lenkrad und Airbagmodul realisieren, ohne daß Einschränkungen hinsichtlich Sicherheit und Zuverlässigkeit der Befestigung des Lenkrades auf der Lenksäule in Kauf genommen werden müssen

Die durch Schlitze freigelegten Nabenbereiche lassen sich mittels einer tangential angeordneten Spannschraube nur dann gegeneinander verspannen, wenn sie Durchgangsbohrungen aufweisen und zwischen einer außenliegenden Mutter und dem Kopf der Spannschraube angeordnet sind. Da eine gesonderte Mutter bei der Endmontage unerwünscht ist, ist das erforderliche Gewinde bei dem bekannten Lenkrad in einem der beiden gegeneinander verspannbaren Nabenbereiche angeordnet und der andere Nabenbereich mit einer Durchgangsbohrung und einem Anschlag für den Schraubenkopf versehen. Bei einer derartigen Ausführungsform ergibt sich das Problem, daß die Schraube bei einer Demontage des Lenkrades nicht weit genug herausgedreht werden kann. Wenn das vordere Ende des Schraubengewindes aus dem Innengewinde des Nabenbereiches austaucht, greift die Schraube immer noch tangential in die umlaufende Nut der Lenksäule ein, so daß das Lenkrad nicht von der Lenksäule abgezogen werden kann. Da der Schraubenkopf nicht nach außen über die Lenkradumkleidung vorstehen soll, kann man ihn nicht ergreifen, ohne in der Lenkradumkleidung eine größere Ausnehmung vorzusehen, was ebenfalls nicht erwünscht ist. Ein aktives Zurückziehen der Schraube, deren vorderes Gewindeende nicht mehr im Eingriff mit dem Innengewinde des einen Nabenbereiches steht, ist daher äußerst schwierig.

Der Erfindung liegt die Aufgabe zugrunde, das bekannte Lenkrad weiter zu verbessern und insbesondere die erforderliche Befestigungsschraube so in die aus Lenkrad und Airbagmodul bestehende Baueinheit zu integrieren, daß sie nicht als gesondertes Bauteil der Endmontage zugeführt werden muß, ohne daß dadurch die Montage und Demontage des Lenkrades irgendwie behindert oder erschwert wird.

Zur Lösung dieser Aufgabe wird erfindungsgemäß vorgeschlagen, daß die Spannschraube ein im wesentlichen über ihre gesamte Länge durchgehendes Gewinde aufweist, daß an der Nabe ein vorzugsweise durch ein Federblech gebildeter Schraubenhalter mit einer die Spannschraube umgreifenden Ausnehmung elastisch abgestützt ist und daß die Spannschraube durch die Ausnehmung mit dem Schraubenhalter in Schraubeneingriff ist.

Mit der erfindungsgemäßen Anordnung eines Federblechs, das als drehfestes, axial elastisch auslenkbares Schraublager für die Spannschraube dient, sind die oben beschriebenen Schwierigkeiten ausgeräumt. Der Schraubenhalter bzw. das Federblech ist so ausgebildet und angeordnet, daß die Schraube bei der Montage des Lenkrades zunächst gegen die Rückstellkraft des Federblechs axial vorgeschoben werden muß, bis sie am Anfang des Innengewindes anliegt und dann eingeschraubt werden kann. Dadurch wird das Federblech vorgespannt, so daß auf die Schraube bei montiertem Lenkrad permanent eine axiale Rückstellkraft wirkt, selbst wenn die Schraube im Federblech weiter vorgeschraubt wird. Die axiale Spannkraft wirkt auf die Schraube solange, wie das Schraubengewinde bei einer Demontage des Lenkrades noch mit dem Innengewinde in Eingriff steht. Taucht das Schraubengewinde aus dem Innengewinde aus, wird die Schraube durch das Federblech axial um das erforderliche Maß zurückgezogen, so daß sie nicht mehr tangential in die umlaufende Nut der Lenksäule eingreift. Der vorzugsweise im mittleren Längenbereich der Schraube auf dem Gewinde fest angeordnete Anschlag sorgt zum einen für eine Begrenzung der Einschraubtiefe der Spannschraube, und zum anderen dafür, daß die Schraube bei einer Demontage nicht zu weit herausgedreht wird. Würde man das Herausdrehen der Schraube nicht begrenzen, könnte der Weg, um den die Schraube bei der Montage des Lenkrades zunächst axial vorgeschoben werden muß, größer sein als der ausgelegte Federungsweg des Federblechs, so daß ein Gewindeeingriff nicht mehr möglich wäre. Mit dem drehfesten, axial elastisch auslenkbaren Schraublager für die Spannschraube wurde eine Lösung gefunden, mit der das bekannte Lenkrad mit zwei elastisch gegeneinander verspannbaren Nabenbereiche auf denkbare einfache Weise montiert und demontiert werden kann, ohne daß zusätzliche, nicht mit der aus Lenkrad und Airbagmodul bestehenden Baueinheit verbundene Befestigungsmittel erforderlich sind und ohne daß die erforderliche Spannschraube als gesondertes Bauteil erst bei der Endmontage eingesetzt werden muß.

Weitere Einzelheiten werden anhand des in den Figuren 1 bis 3 dargestellten Ausführungsspiels näher erläutert. Es zeigen:
- Figur 1: eine Ansicht des Nabenbereiches in Richtung der Lenksäulenachse
- Figur 2: einen Schnitt durch den Nabenbereich
- Figur 3: eine vergrößerte Ansicht des Federblechs

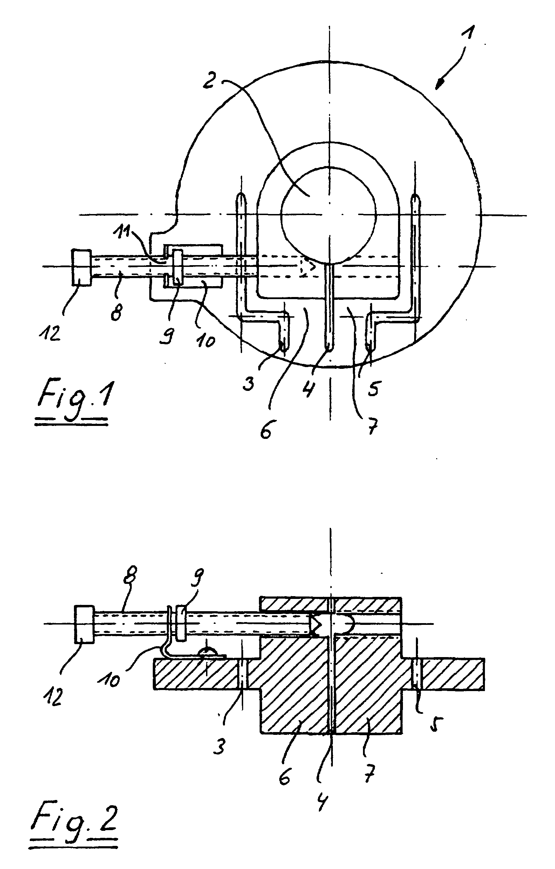

Die in Figur 1 dargestellte Nabe 1 eines Lenkrades besitzt eine Bohrung 2 für die Aufnahme des Lenksäulenendes sowie durch Schlitze 3, 4, 5 die parallel zur Achse der Bohrung 2 angeordnet sind, zwei freigeschnittene Nabenbereiche 6 und 7, die mittels einer tangential zur Bohrung 2 angeordneten Spannschraube 8 elastisch gegeneinander verspannt werden können, nachdem das Lenkrad auf die Lenksäule aufgesetzt worden ist. Wie aus Figur 2 ersichtlich hat die Nabe 1 des Ausführungsbeispiels einen massiven zentralen Teil, an den sich einstückig ein umlaufender flanschartiger Bereich anschließt. Die äußeren Schlitze 3 und 5 verlaufen durch den flanschartigen Bereich während sich der mittlere Schlitz 4 radial von der Bohrung 2 durch den massiven Teil und den Flanschbereich erstreckt. Die nicht dargestellten Lenkradspeichen verlaufen trichterförmig vom Flanschbereich der Nabe 1 zum ebenfalls nicht dargestellten Lenkradkranz.

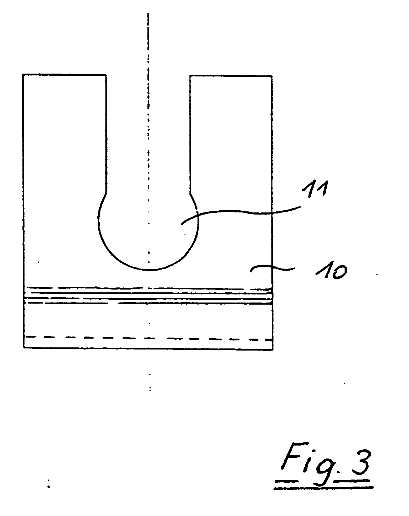

Die Spannschraube 8 besitzt einen Anschlag 9, der etwa auf der Mitte der Spannschraube zwischen vorderem Ende und Schraubenkopf 12 angeordnet ist. Zwischen dem Anschlag 9 und dem Schraubenkopf 12 greift ein Federblech 10 mit einem auf den Kerndurchmesser der Spannschraube 8 abgestimmten Schlitz 11 (siehe Figur 3) in das Schraubgewinde ein, wodurch ein drehfestes, axial elastisch auslenkbares Schraublager gebildet wird. Das Federblech 10 ist am äußeren Flanschbereich der Nabe, der an der elastischen Verspannung der Nabenbereiche 6 und 7 nicht teilnimmt, befestigt. Die Spannschraube ist in ihrer zurückgezogenen Position dargestellt, in der sie aus dem Innengewinde des Nabenbereiches 7 ausgetaucht und soweit zurückgezogen ist, daß sie nicht mehr tangential in die umlaufende Nut der Lenksäule eingreift. Zum Montieren des Lenkrades wird die Schraube durch Druck auf den Schraubenkopf 12 zunächst axial vorgeschoben, bis sie in das Innengewinde eingreift, und danach gedreht, bis der Anschlag 9 außen am Nabenbereich 6 anliegt und bis die Nabenbereiche 6 und 7 auf das Endmaß gegeneinander verspannt sind. Dabei dreht sich die Spannschraube 8 im Schlitz 11 des Federblechs 10, das beim Eindrücken der Schraube vorgespannt wird und vorgespannt bleibt, bis bei einer Demontage des Lenkrades das vordere Ende der Spannschraube 8 aus dem Innengewinde des Nabenbereiches 7 austaucht. Das Federblech 10 kann sich dann entspannen und die Spannschraube 8 in die dargestellte Position zurückziehen.

## Patentansprüche

1. Lenkrad mit einer zur Befestigung auf einer Lenksäule ausgebildeten, einteiligen Nabe (1), die eine zentrale Bohrung (2) zum Aufsetzen auf die Lenkwelle sowie parallel zur Bohrung (2) angeordnete Schlitze (3, 4, 5) aufweist, durch die zwei Nabenbereiche (6, 7) derart freigelegt sind, daß sie unter Verringerung des Bohrungsdurchmessers mittels einer sich tangential zur Bohrung (2) erstreckenden Spannschraube (8) elastisch gegeneinander verspannbar sind, **dadurch gekennzeichnet, daß** die Spannschraube (8) ein im wesentlichen über ihre gesamte Länge durchgehendes Gewinde aufweist, daß an der Nabe (1) ein Schraubenhalter (10) mit einer die Spannschraube (8) umgreifenden Ausnehmung (11) in Axialrichtung der Spannschraube elastisch abgestützt ist, und daß die Spannschraube (8) durch die Ausnehmung (11) mit dem Schraubenhalter (10) in Schraubeingriff ist.

2. Lenkrad nach Anspruch 1, **dadurch gekennzeichnet, daß** der Schraubenhalter durch ein Federblech (10) gebildet ist.

3. Lenkrad nach Anspruch 1 oder 2, **dadurch gekennzeichnet, daß** die Spannschraube (8) im mittleren Bereich ihrer Längsausdehnung einen ihre Einschraubtiefe begrenzenden Anschlag (9) aufweist.

4. Lenkrad nach Anspruch 2 oder 3, **dadurch gekennzeichnet, daß** die Nabe aus einem die zwei Nabenbereiche (6, 7) bildenden massiven zentralen Teil und einem einteilig angeformten radialen Flanschbereich besteht, an dem das Federblech (10) befestigt ist.

## Claims

1. A steering wheel comprising a one-piece hub (1) configured for attachment on a steering column and having a central bore (2) for being placed onto the steering shaft as well as slits (3, 4, 5) arranged parallel to the bore (2), the slits (3, 4, 5) exposing two hub regions (6, 7) such that they can be tensioned elastically in relation to each other by means of a clamping screw (8) extending tangentially to the bore (2) while the bore diameter is reduced, **characterized in that** the clamping screw (8) has a thread which is substantially continuous over its entire length, that a screw holder (10) having a recess (11) embracing the clamping screw (8) is elastically supported on the hub (1) in the axial direction of the clamping screw, and that the clamping screw (8) is in threaded engagement with the screw holder (10) by the recess (11).

2. The steering wheel according to claim 1, **characterized in that** the screw holder is formed by a spring plate (10).

3. The steering wheel according to claim 1 or 2, **characterized in that** in the central region of its longitudinal extent, the clamping screw (8) has a stop (9) limiting its thread reach.

4. The steering wheel according to claim 2 or 3, **characterized in that** the hub consists of a solid central piece forming the two hub regions (6, 7) and an integrally moulded radial flange region to which the spring plate (10) is fastened.

## Revendications

1. Volant de direction comportant un moyeu (1) monobloc réalisé pour être fixé sur une colonne de direction, lequel présente un perçage (2) central destiné à être placé sur l'arbre de direction ainsi que des fentes (3, 4, 5) agencées parallèlement au perçage (2), à travers lesquelles deux zones de moyeu (6, 7) sont dégagées de telle sorte qu'elles peuvent être serrées élastiquement l'une par rapport à l'autre au moyen d'une vis de serrage (8) s'étendant tangentiellement au perçage (2), en réduisant le diamètre du perçage, **caractérisé en ce que** la vis de serrage (8) présente un filetage sensiblement continu sur toute sa longueur, **en ce qu'**un porte-vis (10) avec un évidement (11) entourant la vis de serrage (8) est soutenu élastiquement en direction axiale de la vis de serrage, et **en ce que** la vis de serrage (8) est en engagement par vissage avec le porte-vis (10) à travers l'évidement (11).

2. Volant de direction selon la revendication 1, **caractérisé en ce que** le porte-vis est formé par une tôle à ressort (10).

3. Volant de direction selon la revendication 1 ou 2, **caractérisé en ce que** la vis de serrage (8) présente, dans la région médiane de son extension longitudinale, une butée (9) limitant sa profondeur de vissage.

4. Volant de direction selon la revendication 2 ou 3, **caractérisé en ce que** le moyeu est constitué par une partie centrale massive formant les deux zones de moyeu (6, 7) et par une zone de bride radiale moulée d'un seul tenant, sur laquelle est fixée la tôle à ressort (10).
